(19) Europäisches Patentamt
European Patent Office
Office européen des brevets

(11) EP 2 258 770 B1

(12) EUROPEAN PATENT SPECIFICATION

(45) Date of publication and mention of the grant of the patent:
**17.10.2012 Bulletin 2012/42**

(21) Application number: **09725512.9**

(22) Date of filing: **25.02.2009**

(51) Int Cl.:
***B60C 1/00*** (2006.01) ***C08L 53/00*** (2006.01)
***B60C 5/14*** (2006.01) *C08L 77/00* (2006.01)
*C08L 77/06* (2006.01)

(86) International application number:
**PCT/JP2009/053399**

(87) International publication number:
**WO 2009/119232 (01.10.2009 Gazette 2009/40)**

# (54) PNEUMATIC TIRE

LUFTREIFEN

PNEUMATIQUE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **26.03.2008 JP 2008081555**
**04.06.2008 JP 2008146563**
**20.10.2008 JP 2008269975**

(43) Date of publication of application:
**08.12.2010 Bulletin 2010/49**

(73) Proprietor: **Sumitomo Rubber Industries, Ltd.**
**Kobe-shi, Hyogo 651-0072 (JP)**

(72) Inventors:
- **MIYAZAKI, Tatsuya**
  **Kobe-shi**
  **Hyogo 651-0072 (JP)**
- **NAKADERA, Keiichi**
  **Kobe-shi**
  **Hyogo 651-0072 (JP)**

(74) Representative: **Manitz, Finsterwald & Partner GbR**
**Martin-Greif-Strasse 1**
**80336 München (DE)**

(56) References cited:
**WO-A1-03/029029**
**JP-A- 2005 344 030**
**JP-A- 2007 262 424**
**US-A1- 2005 004 311**
**JP-A- 6 107 896**
**JP-A- 2007 099 846**
**JP-T- 10 508 888**

- **DATABASE WPI Week 200380 Thomson Scientific, London, GB; AN 2003-856523 XP002626182, & JP 2003 113287 A (KANEKA CORP) 18 April 2003 (2003-04-18)**
- **DATABASE WPI Week 200729 Thomson Scientific, London, GB; AN 2007-296852 XP002626189, & JP 2007 050614 A (YOKOHAMA RUBBER CO LTD) 1 March 2007 (2007-03-01)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 258 770 B1

## Description

TECHNICAL FIELD

This invention relates to pneumatic tine comprising an inner liner made from a polymer mixture and a polymer composition being good in durability and anti-air permeability, and also being a superior adhesive property to adjacent rubber,

BACKGROUND ART

In recent years, there have been strong social demands for low fuel costs for automobiles, and light-weight tires have been developed to meet these demands, and among the tire members, with respect to an inner liner that is placed inside a tire so as to reduce the amount of air leakage from the inside of a pneumatic tire (amount of air permeation) toward the outside and consequently improve the anti-air permeability, its light weight and the like have been attempted.

At present, a rubber composition for an inner liner is formed by using a butyl-based rubber containing 70 to 100% by mass of butyl rubber and 30 to 0% by mass of natural rubber so as to improve the anti-air permeability of a tire. Moreover, the butyl-based rubber contains about 1% by mass of isoprene in addition to butylene so that, in cooperation with sulfur, a vulcanizing accelerator and zinc white, this allows the rubber compound to be co-crosslinked with adjacent rubber. The butyl-based rubber with its normal compound requires a thickness of about 0.6 to 1.0 mm for tires in passenger cars and a thickness of about 1.0 to 2.0 mm for tires in trucks and buses, and in order to achieve the light weight of the tire, a polymer which is superior in its anti-air permeability to the butyl-based rubber and can make the thickness of an inner liner layer thinner has been proposed.

As a pneumatic tire that can simultaneously achieve suppression of a reduction in a pneumatic pressure, improved durability and improved fuel costs, Japanese Patent Laying-Open No. 2007-291256 has proposed a pneumatic tire that uses a rubber composition for an inner liner containing an ethylene-vinyl alcohol copolymer that is represented by the following general formula (I) at least in a range from 15 to 30 parts by mass relative to 100 parts by mass of a rubber component made from natural rubber and/or synthesized rubber is used as the inner liner layer.

[Formula 1]

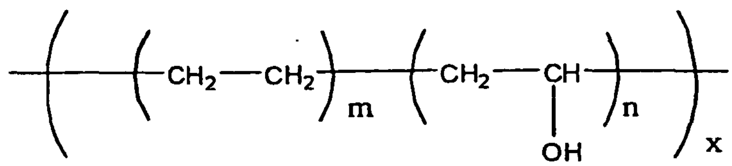

(I)

(wherein, m and n each independently represents 1 to 100, and x represents 1 to 1000.) However, in the technique shown in Japanese Patent Laying-Open No. 2007-291256, the thickness of a rubber sheet using the rubber composition is 1 mm, still leaving some room for improvements in achieving the light weight of the tire.

Japanese Patent Laying-Open No. 9-165469 has proposed a pneumatic tire in which an inner liner layer is formed by using nylon that has low air permeability so that the adhesive property to the tire inner face or a carcass layer that are made from rubber composition can be improved. However, in the technique of Japanese Patent Laying-Open No. 9-165469, after a nylon film has been RFL-treated, a rubber paste composed of a rubber composition needs to be bonded to the resulting film in order to form a nylon film layer, resulting in a problem of complicated processes.

Patent Document 1: Japanese Patent Laying-Open No. 2007-291256
Patent Document 2: Japanese Patent Laying-Open No. 9-165469

JP 2005-344,030 A discloses a thermoplastic resin composition containing 5 to 95 wt.-% of an isobutylene-based block copolymer and 5 to 95 wt.% of at least one elastomer selected from a polyester-based thermoplastic elastomer and a polyamide-based thermoplastic elastomer.

WO 03/029020 A1 relates to a pneumatic tire, whose inner liner is composed of a thermoplastic elastomer composition having a certain air permeation coefficient and a certain Young's modulus. The rubber composition may include natural rubber, brominated butyl rubber, carbon black, zinc oxide, stearic acid and an aromatic oil.

JP 2007-050,614 A1 discloses a laminate containing a thermoplastic-elastomer composition, an adhesive agent and a diene rubber composition.

## DISCLOSURE OF THE INVENTION

### PROBLEMS TO BE SOLVED BY THE INVENTION

In order to solve the above-mentioned problems, an object of the present invention is to provide a pneumatic five comprising an inner liner made of a polymer composition that can simultaneously achieve improved durability, adhesive property to adjacent rubber and processability, while maintaining anti-air permeability.

### MEANS FOR SOLVING THE PROBLEMS

The present invention relates to a pneumatic tire comprising an inner liner made from a polymer mixture comprising a styrene-isobutylene-styrene triblock copolymer in a range from 99 to 60% by mass and a polyamide-based polymer in a range from 1 to 40% by mass containing polyamide in the molecular chain thereof and having a Shore D hardness of 70 or less.

Preferably, the polymer mixture of the pneumatic tire comprises an ethylene-vinyl alcohol copolymer in a range from 15 to 40% by mass.

Moreover, it is preferred that the styrene-isobutylene-styrene triblock copolymer of the polymer mixture of the pneumatic tire comprises styrene in a range from 10 to 30 % by mass.

According to a further embodiment of the present invention, the polyamide-based polymer of the polymer mixture of the pneumatic tire is a block copolymer composed of a polyamide component and a polyether component.

Furthermore, the present invention relates to a pneumatic tire comprising an inner liner made from a polymer composition, wherein the polymer composition comprises the aforementioned polymer mixture and a filler in a range from 5 to 40 parts by mass relative to 100 parts by mass of the polymer mixture.

Preferably, the polymer composition of the pneumatic tire comprises mica serving as the filler in a range from 10 to 25 parts by mass relative to 100 parts by mass of the polymer mixture.

Moreover, it is preferred that the polymer composition of the pneumatic tire comprises 1 to 30 parts by mass of a non-phenol-based resin relative to 100 parts by mass of the polymer mixture, wherein the non- phenol-based resin includes one kind or more resins selected from the group consisting of a C5petroleum-based resin, a C9 petroleum-based resin and a terpene resin.

Furthermore, the present invention relates to a pneumatic tire comprising an inner liner rubber/insulation rubber joined body, obtained by joining an insulation rubber rolled at a temperature from 70°C to 130°C in a calender process to an inner liner rubber made from the aforementioned polymer mixture.

Additionally, the present invention relates to a pneumatic tire comprising an inner liner rubber/insulation rubber joined body, obtained by joining an insulation rubber rolled at a temperature from 70°C to 130°C in a calender process to an inner liner rubber made from the aforementioned polymer composition.

Preferably, the inner liner is coated with a rubber paste having a concentration of a rubber composition in a range from 5 to 20% by weight.

Furthermore, the pneumatic tire according to the present invention may comprise: a side wall portion provided with a protective film made from the aforementioned polymer composition.

### EFFECTS OF THE INVENTION

In accordance with the present invention, by compounding specific amounts of a styrene-isobutylene-styrene triblock copolymer and a polyamide-based polymer, it becomes possible to provide a polymer composition that is good in durability and anti-air permeability and also exerts a superior adhesive property to adjacent rubber.

Moreover, by adding a non-phenol-based resin to the polymer composition, it becomes possible to provide a polymer composition superior in processability.

Furthermore, by joining insulation rubber to the polymer composition or applying a rubber paste thereto, it is possible to further improve the adhesive property to adjacent rubber and the processability.

### BRIEF DESCRIPTION OF THE DRAWINGS

Fig. 1 is a schematic cross-sectional view showing the right half of a pneumatic tire in accordance with the present invention.

Fig. 2 is a schematic cross-sectional view showing the right half of the pneumatic tire in accordance with the present invention.

Fig. 3 is a schematic cross-sectional view showing an inner liner rubber/insulation rubber joined body and a carcass in accordance with the present invention.

DESCRIPTION OF THE REFERENCE SIGNS

1 Pneumatic tire, 2 tread portion, 3 side wall portion, 4 bead portion, 5 bead core, 6 carcass, 6a carcass cord, 7 belt layer, 8 bead apex, 9 inner liner, 9b inner liner rubber, 10 protective film, 11 insulation rubber

BEST MODES FOR CARRYING OUT THE INVENTION

A polymer mixture to be used in the tire of the present invention contains a styrene-isobutylene-styrene triblock copolymer (hereinafter, referred to also as SIBS) in a range from 99 to 60% by mass and a polyamide-based polymer that contains polyamide in its molecular chain and has a Shore D hardness of 70 or less in arrange from 1 to 40% by mass.
The polymer mixture has superior anti-air permeability and durability derived from an isobutylene portion of SIBS. Moreover, since SIBS has a completely saturated molecular structure except for those of aromatic groups, it is less vulnerable to degradable hardening, and exerts superior durability. On the other hand, because of contribution derived from a polyamide portion of the polyamide-based polymer, the polymer mixture is allowed to adhere to an unsaturated polymer so that the adhesive property thereof to adjacent rubber is improved.
Moreover, in the present invention, in the case where the polymer composition containing the polymer mixture is used for a pneumatic tire, since anti-air permeability is ensured by allowing it to contain SIBS, it becomes possible to eliminate the use for a halogenated rubber having a high specific gravity, such as halogenated butyl rubber, which has been conventionally used for imparting the anti-air permeability thereto, or to reduced the amount of use thereof even when it is used. With this arrangement, it is possible to achieve a light-weight tire, and consequently to improve the fuel cost. Moreover, the halogenated rubber has a problem of degradation of the adhesive property between ply cords of a pneumatic tire and rubber by influences of halogen in the rubber; however, since the present invention makes it possible to reduce the amount of use of the halogenated rubber, the adhesive property between the ply cords and the polymer composition can be improved so that the durability of the pneumatic tire can also be improved.

<Styrene-isobutylene-styrene triblock copolymer>

In the polymer mixture of the present invention, the content of SIBS is set in a range from 99 to 60% by mass. Since the content of SIBS is set to 60% by mass or more, it becomes possible to obtain a polymer composition having superior anti-air permeability and durability. Moreover, the content is preferably set in a range from 95 to 80% by mass from the viewpoint of providing further good anti-air permeability and durability.
In general, the SIBS contains 10 to 40% by mass of styrene. The content of styrene is preferably set in a range from 10 to 30% by mass from the view point of obtaining further good anti-air permeability and durability.
The SIBS preferably has a molar ratio (isobutylene/styrene) between isobutylene and styrene of 40/60 to 95/5 from the viewpoint of rubber elasticity of the copolymer. In the SIBS, from the viewpoints of rubber elasticity and handling property, the polymerization degree of each of the blocks is preferably set to about 10,000 to 150,000 in isobutylene, and to about 0 to 30,000 in styrene (the polymerization degree of less than 10,000 causes a liquid state).
The SIBS can be obtained by using a polymerization method for commonly-used vinyl-based compounds, for example, it can be obtained by a living cation polymerization method.
For example, Japanese Patent Laying-Open No. 62-48704 and Japanese Patent Laying-Open No. 64-62308 have disclosed that a living cation polymerization between isobutylene and another vinyl compound is available, and that by using isobutylene and other compounds to the vinyl compound, a polyisobutylene-based block copolymer can be produced. In addition to this, a method for producing a vinyl compound polymer by the use of the living cation polymerization method is described in, for example, U.S. Patent No. 4,946,899, U.S. Patent No. 5,219,948 and Japanese Patent Laying-Open No. 3-174403.
Since SIBS does not have double bonds in its molecule other than those of aromatic groups, it is highly stable against ultraviolet rays in comparison with a polymer having double bonds in its molecule such as, for example, polybutadiene, and consequently has superior weather resistance. Moreover, it has no double bonds in its molecule, and although it is a saturated-type rubber-state polymer, the refractive index (nD) relative to light having a wavelength of 589 nm at 20°C corresponds to 1.506 in accordance with Polymer Handbook (Willy, 1989). This value is significantly high in comparison with other saturated-type rubber-state polymers, for example, an ethylene-butene copolymer.

<Polyamide-based polymer>

In the polymer mixture of the present invention, the content of a polyamide-based polymer is set to 1 to 40 %

by mass. By setting the content of the polyamide-based polymer to 40 % by mass or less, it is possible to obtain a polymer mixture that can achieve both of durability and adhesive property. Moreover, from the viewpoint of compounding more SIBS and ethylene-vinyl alcohol copolymer having superior anti-air permeability while ensuring the durability and adhesive property, the content thereof is preferably set in a range from 3 to 20 % by mass.

The polyamide-based polymer of the present invention is preferably prepared as a polyamide-based polymer having a Shore D hardness of 70 or less. The Shore D hardness exceeding 70 is not preferable because it causes degradation of crack preventive property upon bending a tire and upon moving the tire. The Shore D hardness is preferably set in a range of 15 to 70, more preferably in a range from 18 to 70, even more preferably in a range from 20 to 70, and particularly preferably in a range from 25 to 70.

The polyamide-based polymer of the present invention preferably contains 50% by mass or more of the following polyether amide elastomer (X).

Polyether amide elastomer (X) is: a block copolymer that is composed of a polyamide component obtained by polymerizing a triblock polyether diamine compound (A) represented by the following formula (II), a polyamide forming monomer (B) and a dicarboxylic acid compound (C) and a polyether component.

[Formula 2]

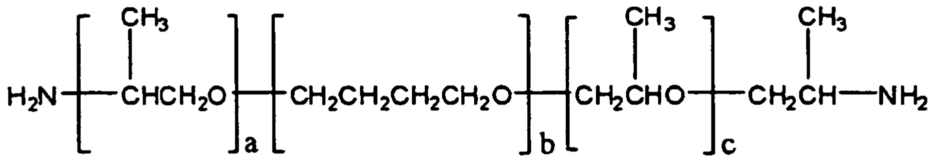

(II)

(wherein, each of a and b represents 1 to 20, and c represents 4 to 50.)

The polyamide forming monomer (B) is preferably represented by the following formula (III) and/or the following formula (IV).

[Formula 3] $H_2N\text{-}R^1\text{-}COOH$ (III)

(wherein, $R^1$ represents a linking group containing a hydrocarbon chain.)

[Formula 4]

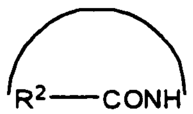

(IV)

(wherein, $R^2$ represents a linking group containing a hydrocarbon chain.)

The dicarboxylic acid compound (C) is preferably represented by the following formula (V) and/or an aliphatic dicarboxylic acid compound and/or an alicyclic dicarboxylic compound.

[Formula 5]

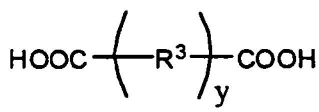

(V)

(wherein, $R^3$ represents a linking group containing a hydrocarbon chain, and y represents 0 or 1.)

In the case where the polyamide-based polymer is prepared as a polyamide-based polymer having a hard segment derived from a polyamide component and a soft segment derived from a polyether component, its crystallinity is lowered so that it becomes possible to obtain a polyamide-based polymer having a high breaking elongation EB and exerts flexibility from a low temperature to high temperature range.

Moreover, since the polyamide-based polymer exerts increased flowability at tire vulcanizing temperature (140 to 180°C) and consequently has high wettability to an irregular surface, it becomes possible to obtain superior effects in adhesive property to adjacent rubber.

Conventionally known polyamide-based polymers may be used as the polyamide-based polymer of the present invention. As the polyamide-based polymers, elastomers and the like composed of a polyamide block made of at least one kind of aliphatic nylon selected from nylon 6, nylon 66, nylon 11 and nylon 12 and at least one kind of polyether block selected from polyoxyethylene, polyoxypropylene and polyoxybutylene can be used.

A method for producing the polyamide-based polymer is not particularly limited, and those methods disclosed in Japanese Patent Laying-Open No. 56-65026, Japanese Patent Laying-Open No. 55-133424, Japanese Patent Laying-Open No. 63-95251 and the like may be used.

<Polymer mixture>

In addition to SIBS and a polyamide-based polymer having a Shore D hardness of 70 or less that contains polyamide in its molecular chain, the polymer mixture of the present invention may contain another polymer or resin.

The polymer mixture of the present invention preferably contains an ethylene-vinyl alcohol copolymer in a range from 15 to 40% by mass. By setting the content of the ethylene-vinyl alcohol copolymer in the polymer mixture to 15% by mass or more, it becomes possible to ensure the gas barrier property of the polymer composition. Moreover, by setting the content thereof to 40 % by mass or less, the kneading property of the polymer composition upon preparation can be ensured, and at the same time, the basic performances such as mechanical strength in an inner liner layer of a tire can be ensured. The content is more preferably set to 20% by mass or more, further to 25% by mass or more. Moreover, from the viewpoint of durability of the tire, the content is further preferably set to 30% by mass or less.

The ethylene-vinyl alcohol copolymer of the present invention is preferably prepared as an ethylene-vinyl alcohol copolymer represented by the following formula (I):

[Formula 6]

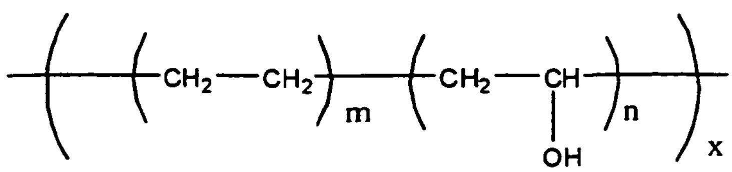

(I)

(wherein, m and n each independently represents 1 to 100, and x represents 1 to 1000.)

By the ethylene-derived portion of the ethylene-vinyl alcohol copolymer, its compatibility with the polymer mixture is improved so that the ethylene-vinyl alcohol copolymer is allowed to exist in the polymer composition with a minute dispersion size. On the other hand, the ethylene-vinyl alcohol copolymer is allowed to exert a good gas barrier property by the contribution of the vinyl alcohol-derived portion. That is, in the present invention, since the ethylene-vinyl alcohol copolymer having a superior gas barrier property is dispersed in the polymer composition in the form of islands with a minute size so that, even when the inner liner layer of the tire is made thinner, a superior gas barrier property is exerted. Thus, the light weight of the tire is achieved, and the fuel cost can be improved.

In the general formula (I), each of m and n is set to 1 or more so as to form an ethylene-vinyl alcohol copolymer. On the other hand, by setting each of m and n to 100 or less, it becomes possible to obtain an ethylene-vinyl alcohol copolymer that achieves both of compatibility with the polymer mixture and a good gas barrier property. In order to further improve the compatibility with the polymer mixture, m is further preferably set to 5 or more. Moreover, in order to further improve the gas barrier property, n is further preferably set to 5 or more. On the other hand, so as not to give adverse effects to the gas barrier property exerted by the vinyl alcohol-derived portion, m is further preferably set to 95 or less, more preferably to 80 or less. Moreover, so as not to give adverse effects to the good compatibility with the polymer mixture exerted by the ethylene-derived portion, n is further preferably set to 95 or less, and more preferably 80 or less.

In the general formula (I), in order to form an ethylene-vinyl alcohol copolymer, x is set to 1 or more. On the other hand, by setting x to 1000 or less, the kneading property of the polymer composition upon preparation is ensured so that a polymer composition in which the ethylene-vinyl alcohol copolymer is uniformly dispersed can be obtained. In order to desirably exert the compatibility with the polymer mixture and the gas barrier property, x is further preferably set to 10 or more, and in order to desirably improve the kneading property, x is further preferably set to 500 or less, and more preferably 100 or less.

The ethylene-vinyl alcohol copolymer represented by the general formula (I) may be contained in a polymer composition in a state where it forms a copolymer with another component, and in this case, the content of the ethylene-vinyl alcohol copolymer refers to the content of the structural portion represented by the general formula (I).

The molecular structure of the ethylene-vinyl alcohol copolymer can be confirmed by, for example, an infrared ray absorption spectrum (IR) and a nuclear magnetic resonance spectrum (NMR).

Preferably, the polymer composition further contains a compatibilizing agent represented by the following general formula (VI):

[Formula 7]

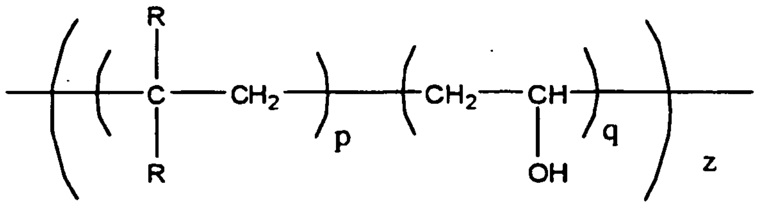

(VI)

(wherein, R represents an alkyl group, p and q each independently represents 1 to 100, and z represents 1 to 5.) The compatibilizing agent has an action for further improving compatibility between the polymer mixture and the ethylene-vinyl alcohol copolymer in the polymer composition. In the case where p and q in the general formula (VI) are respectively set to 1 or more, the action as the compatibilizing agent is desirably exerted, and in the case where p and q are respectively set to 100 or less, the dispersing property of the compatibilizing agent in the polymer mixture becomes good. Here, p is further preferably set to 5 or more, and is more preferably 95 or less, and further preferably 80 or less. Moreover, q is further preferably set to 5 or more, and is more preferably 95 or less, and further preferably 80 or less.

In the formula (VI), z is set to 1 or more so as to form a block copolymer. Moreover, from the viewpoint of improving the dispersing property of the compatibilizing agent in the polymer composition, z is preferably set to 5 or less. Here, z is more preferably set to 2 or more, and more preferably set to 4 or less.

The content of the compatibilizing agent represented by the general formula (VI) is preferably set in a range from 0.1 to 4.8% by mass. In the case where the content is set to 0.1% by mass or more, the action as the compatibilizing agent is desirably exerted, and in the case where the content is set to 4.8% by mass or less, it becomes possible to desirably prevent the basic performances, such as mechanical strength, in the inner line layer of the tire from deteriorating. The content is preferably set to 0.5% by mass or more, more preferably 1.0% by mass or more, and further preferably 1.5 % by mass or more, and is preferably set to 4.3 % by mass or less, more preferably 3.8 % by mass or less, and further preferably 3.4 % by mass or less.

The compatibilizing agent represented by the general formula (VI) may be contained in the polymer composition in a copolymerized state with another component, and in this case, the content of the compatibilizing agent refers to the content of the structural portion represented by the general formula (VI).

In addition to SIBS and a polyamide-based polymer, any of the following components may be compounded with the polymer mixture of the present invention: nylon, PET, chlorobutyl rubber, natural rubber, ethylenepropylene-diene triblock copolymer (EPDM), styrene butadiene rubber (SBR), butadiene rubber, isoprene rubber, butyl rubber, halogenated butyl rubber, and acrylonitrile-butadiene rubber (NBR) and the

<Polymer composition>

The Shore A hardness of the polymer composition made from the polyamide-based polymer and SIBS may be set in a range from 25 to 65. In the case where the hardness is set to 25 or more, the polymer composition for an inner liner is allowed to exert desirable mechanical strength, and in the case where the hardness is set to 65 or less, it becomes possible to prevent the durability from lowering or the like due to becoming too hard of the polymer composition for an inner liner. The hardness is preferably set to 40 or more, more preferably 42 or more, and further preferably 45 or more, and is preferably set to 62 or less, and more preferably 58 or less. Here, the above-mentioned hardness is a value measured in compliance with JIS K 6253.

The specific gravity of the polymer composition for an inner liner to be used in the present invention may be set to 1.70 or less. In the case where the specific gravity is set to 1.70 or less, the improving effect of fuel cost is desirably obtained by achieving a light weight of the tire. The specific gravity is preferably set to 1.40 or less, and more preferably 1.20 or less.

<Softening agent>

In the present invention, the polymer composition for inner liner may contain a non-phenol-based resin. In this case, it becomes possible to further improve the anti-air permeability, the rolling resistance and the processability of the polymer composition for an inner liner. The content of the non-phenol-based resin is preferably set in a range from 1 to 30 parts by mass relative to 100 parts by mass of the polymer mixture.

As the above-mentioned non-phenol-based resin, it is preferable to use one or more kinds of materials selected from C5 petroleum-based resins (C5 petroleum-based resins refer to aliphatic petroleum resins mainly made from olefins and diolefins in C5 distillates obtained by decomposing naphtha), C9 petroleum-based resins (C9 petroleum-based resins refer to aromatic petroleum-based resins mainly made from olefins in C9 distillates obtained by decomposing naphtha) and terpene resins, which have an SP value (Solubility Parameter: Compatibility Parameter) close to that of isobutylene, and exert a superior compatibility therewith, and among these, C5 petroleum-based resins are more preferably used. Examples of the C5 petroleum-based resins include Hilets G-100 manufactured by Mitsui chemicals, Inc., Malkalez T-100AS manufactured by Maruzen Petrochemical Co., Ltd., and Escorez 1102 manufactured by Tonex Co., Ltd., examples of the C9 petroleum-based resins include Petcoal XL manufactured by Tosoh Co., Ltd., and examples of the terpene resins include YS resin PX300N and YS resin PX1150N manufactured by Yasuhara Chemical Co., Ltd.
In the case where a softening agent having an SP value close to that of the polymer is used, a good mixing property with the polymer is obtained, a good vulcanizing adhesive property is exerted, and an appropriate normal-temperature stickiness is exerted upon processing.
In the case where the C5 petroleum-based resin is used as the softening agent, the content thereof is preferably set in a range from 10 to 30 parts by mass relative to 100 parts by mass of the polymer mixture so as to improve the anti-air permeability, complex elastic modulus, stickiness and processability. The content of 10 parts by mass or more preferably makes it possible to improve the stickiness strength to adjacent members and consequently to prevent the film from naturally being peeled therefrom upon molding. Moreover, the content of 30 parts by mass or less preferably makes it possible to provide a good tan$\delta$ value and consequently to prevent excessive contact (wrinkles, holes) upon processing.

<Filler>

In the present invention, the polymer composition for an inner liner may further contain at least one kind of filler consisting of carbon black, talc, clay, mica and calcium carbonate. In this case, the polymer composition for an inner liner is allowed to have good drag and mechanical strength against rupturing of the polymer composition for an inner liner, and in particular, in the case where a flat filler such as mica is contained, it is possible to improve the gas barrier property. The content of the filler is preferably set in a range from 5 to 40 parts by mass relative to 100 parts by mass of the polymer mixture. In the case where the content is set to 5 parts by mass or more, the mechanical strength of the polymer composition for an inner liner becomes higher, and consequently to provide good durability and steering performances of the tire, and in the case where the content is set to 40 parts by mass or less, the processability of the rubber composition for an inner liner becomes good upon production thereof. The content is more preferably set in a range from 10 to 30 parts by mass.
In the present invention, from the viewpoint of improving the air shielding effect, 10 to 25 parts by mass of mica is further desirably contained relative to 100 parts by mass of polymer mixture as the filler.
As the mica, one or more kinds of the materials selected from the group consisting of muscovite (white mica), phlogopite (gold mica) and biotite (black mica) are preferably used. Among these, phlogopite, which has a degree of flatness greater than that of the other micas and is superior in air-shielding effect, is desirably used.
The average particle size of the mica is set to 40$\mu$m or more, and preferably 45$\mu$m or more. The average particle size of less than 40$\mu$m tends to cause an insufficient effect for improving the air retaining property. Moreover, the average particle size of the mica is set to 100$\mu$m or less, and preferably 70$\mu$m or less. The average particle size exceeding 100$\mu$m tends to form a large size of mica, causing a starting point of a crack, with the result that the inner liner tends to have a crack due to bending fatigue.
Examples of a resin used for coating the surface of the mica include: an urethane resin, an acrylic resin, an epoxy resin, a nylon resin and a polyester resin. Among these, from the viewpoint of exerting a comparatively high compatibility with rubber, an urethane resin, an acrylic resin and an epoxy resin are preferable. For example, the coating method includes a method in which a resin is fused and mica is put therein, and after having been stirred, this is coagulated and pulverized.
The aspect ratio (rate of flatness) of the mica is set to 50 or more, and preferably 55 or more. In the case where the aspect ratio is less than 50, it is not possible to obtain a sufficient effect for improving the air retaining property. Moreover, the aspect ratio of the mica is preferably set to 100 or less, and more preferably 70 or less. The aspect ratio exceeding 100 causes a reduction in the mica strength, and subsequently cracks in the mica. Here, the aspect ratio refers to a ratio of major diameter to thickness in the mica.
The mica can be obtained by using a pulverizing method, such as a wet pulverizing method and a dry pulverizing method. The wet pulverizing method makes it possible to form a cleaner surface, and also to achieve a higher effect for improving the air retaining property. Here, the dry pulverizing method makes it possible to simplify the production process, and consequently to reduce the costs; therefore, preferably, these methods can be used depending on cases.
The content of the mica is preferably set to 10 parts by mass or more, and preferably 15 parts by mass or more

relative to 100 parts by mass of the polymer mixture. In the case of 10 parts by mass or less of the content of the mica, it is not possible to obtain a sufficient air-retaining property, heat-generating property and anti-crack-developing property of the inner liner. Moreover, the content of the mica is preferably set to 25 parts by mass or less, and more preferably 20 parts by mass or less relative to 100 parts by mass of the rubber components. The content of the mica exceeding 25 parts by mass tends to cause a reduction in the tearing strength of the rubber composition, resulting in a higher possibility of cracks.

The nitrogen-adsorption specific surface area ($N_2SA$) of carbon black used as carbon black and/or silica is preferably set to 20 $m^2/g$ or more, and more preferably 25 $m^2/g$ or more, from the viewpoints of obtaining a sufficient reinforcing property and anti-crack-developing property. Moreover, the $N_2SA$ of the carbon black is preferably set to 70 $m^2/g$ or less, more preferably 60 $m^2/g$ or less, and further preferably 40 $m^2/g$ or less, from the viewpoints of reducing the hardness of the polymer composition and of obtaining a superior low heat-generating property.

With respect to the silica used as carbon black and/or silica, those prepared by using a wet method or those prepared by using a dry method may be used, but there is no specific limitation.

The nitrogen-adsorption specific surface area ($N_2SA$) of the silica is preferably set to 80 $m^2/g$ or more, and preferably 100 $m^2/g$ or more, from the viewpoints of obtaining a superior reinforcing property and tear resistant property. Moreover, the $N_2SA$ of the silica is preferably set to 200 $m^2/g$ or less, more preferably 180 $m^2/g$ or less, and further preferably 150 $m^2/g$ or less, from the viewpoints of reducing the hardness of the polymer composition and of obtaining a superior low heat-generating property.

When silica is used, the content of the silica is preferably set to 30 parts by mass or less relative to 100 parts by mass of the polymer mixture. The content exceeding 30 parts by mass tends to cause self-coagulation among silica particles in some cases.

Moreover, the polymer composition for an inner liner of the present invention may contain calcium carbonate, Austen black, talc, clay, calcium carbonate and the like from the viewpoints of relatively reducing the polymer content, of reinforcing the polymer composition and of reducing the cost. Among these, talc and clay, whose particle sizes do not cause nuclei of crack developments, and which have a good dispersing property and are free from re-aggregation, are preferably used.

In the case where a low-molecular-weight liquid-state oil, such as process oil and paraffin oil, is compounded as the softening agent, since, upon processing as a film, the thin film is put under a high-temperature condition (about 200°C), the oil is evaporated, and tends to cause difficulty in exerting functions as a sticker.

<Other compounding components>

The polymer composition for an inner liner to be used in the present invention may appropriately contain the other components such as those contained in the normal polymer composition for a tire, as described below.

For example, the following materials may be contained as a plasticizer: DMP (dimethyl phthalate), DEP (diethyl phthalate), DBP (dibutyl phthalate), DHP (diheptyl phthalate), DOP (dioctyl phthalate), DINP (diisononyl phthalate), DIDP (diisodecyl phthalate), BBP (butylbenzyl phthalate), DLP (dilauryl phthalate) and DCHP (dicyclohexyl phthalate).

<Preparation of polymer composition>

The polymer composition of the present invention is produced by using an injection processing method. That is, a polymer mixture prepared in accordance with predetermined compounding ratios is loaded into a rotation rotor placed in an injection press, and after blending the polymer components in the rotation rotor, the resulting mixture is pressurized and injection-molded so that the polymer composition of the present invention can be prepared.

The above-mentioned injection molding is preferably carried out by using a metal mold having a size of 13 cm × 13 cm × 2 mm (thickness) under conditions of a metal-mold head pressure of 100 Kf, a head temperature of 200°C, an injection speed of 80 mm/sec and rotor number of revolutions of 100 rpm.

In the case where, upon adding a filler to the polymer mixture of the present invention, the rotation rotor attached to the injection press is used, the degree of dispersion tends to become insufficient; therefore, it is preferable to preliminarily mix the polymer mixture and the filler by using a kneader, a roll, a Van Bally mixer or the like. The preliminarily mixing process is further preferably carried out by using a temperature-adjusting roll or a temperature-adjusting Van Bally mixer (temperature condition: 130°C to 180°C).

Moreover, the polymer composition of the present invention may be formed by using processes in which, after the mixture is formed into pellets by using a twin-screw extruder, the resulting pellets are processed by using a T die-film extruder.

<Inner liner rubber/insulation rubber joined body>

In the case where the polymer mixture or the polymer composition relating to the present invention is used as an inner liner for a tire, an inner liner rubber/insulation rubber joined body is preferably used.

Referring to Fig. 3, the following description will discuss the inner liner rubber/insulation rubber joined body. By interposing an insulation rubber 11 between an inner liner rubber 9b and a carcass 6, the adhesive strength between the two is increased to prevent an interlayer separation and the contact between an inner liner 9 and a carcass code 6a due to a flow of rubber upon vulcanizing and molding processes. For this reason, this insulation rubber 11 needs to be superior in adhesive property, and, for example, a NR-based rubber, formed by compounding 50 parts by mass or more of natural rubber (NR) into 100 parts by mass of a rubber component, may be used. Here, isoprene rubber (IR) or butadiene rubber (BR) can be desirably used as a remaining rubber component.

The method for forming the inner liner rubber/insulation rubber joined body is, for example, described as follows. First, after a polymer mixture or a polymer composition has been formed into pellets by using a twin-screw extruder, the resulting pellets are formed into a polymer film by using a T-die film extruder. The polymer film is joined to an insulation rubber rolled at a temperature in a range from 70°C to 130°C in a calender process so that an inner liner rubber/insulation rubber joined body is obtained.

The temperature of the calender process of the insulation rubber is preferably set in a range from 70°C to 130°C. The temperature of less than 70°C fails to provide sufficient adhesion performances between the inner liner rubber and the insulation rubber. Moreover, the temperature exceeding 130°C allows the insulation rubber to start a vulcanizing reaction, failing to provide sufficient adhesion performances between the inner liner rubber and the insulation rubber.

<Inner liner rubber coated with rubber paste>

According to the present invention the polymer mixture or the polymer composition is used as the inner liner of a tire and preferably as an inner rubber coated with rubber paste.

The method for producing the inner liner rubber coated with rubber paste is, for example, described as follows. First, after a polymer mixture of a polymer composition has been formed into pellets by using a twin-screw extruder, the resulting pellets are formed into a polymer film by using a T die-film extruder. A rubber paste having a concentration of a rubber composition in a range from 5 to 20% by weight is applied to the polymer film so that an inner liner rubber coated with the rubber paste is obtained.

Rubber pastes normally used for a pneumatic tire may be used as the rubber paste. For example, the rubber paste is formed by dissolving a rubber composition containing a diene-based rubber containing 70% by mass or more of natural rubber in an organic solvent having a low polarity such as toluene, N-hexane, or naphtha, and in addition to this, the same amount as the rubber compounding amount in the carcass layer in the parts by weight of sulfur, carbon, oil, a resin serving as a tackifier, an antioxidant, stearic acid, zinc white, a vulcanizing accelerator, a vulcanizing retarder and the like are contained therein.

The content of the rubber composition in the rubber paste is preferably set in a range from 5 to 20% by weight. The content of less than 5% by weight causes degradation of the stickiness. Moreover, the content exceeding 30% by weight makes it difficult to carry out a uniform coating process, resulting in degradation of the stickiness.

Any one of those conventionally known methods may be used as the coating method for the rubber paste, and, for example, a spray-coating method is preferably used.

<Pneumatic Tire>

The pneumatic tire of the present invention is produced through a normal method by using the polymer mixture or polymer composition of the present invention as the inner liner. The inner liner layer is produced by the following processes: Compounding components of a polymer mixture or a polymer composition are extrusion-molded by using a temperature-adjusting roll (temperature condition: 130°C to 160°C) into a sheet shape (film shape), and this is pasted together with other tire members on a tire molding machine so that an uncrosslinked tire is formed. This uncrosslinked tire is heated and pressed in a vulcanizer so that a pneumatic tire of the present invention can be produced.

Moreover, in the pneumatic tire of the present invention, an insulation rubber, rolled at a temperature in a range from 70°C to 130°C in a calender process, may be joined to the inner liner made from the polymer mixture or polymer composition of the present invention. By using the insulation rubber, it becomes possible to improve the adhesive property and processability of the inner liner layer and the carcass, and consequently to obtain a pneumatic tire that is superior in durability.

Further, in the pneumatic tire of the present invention, a rubber paste having a concentration of a rubber composition in a range from 5 to 20% by weight may be applied to the inner liner made from the polymer mixture or

polymer composition of the present invention. By applying the rubber paste, it becomes possible to improve the molding adhesion performances upon producing a tire.

In the present invention, the thickness of the inner liner, measured at the largest width position of a tire filled with a specific inner pressure, is preferably set in a range from 0.1 to 1.5 mm. The thickness of the inner liner layer of 0.1 mm or more makes it possible to provide a desirable effect for suppressing a reduction in the pneumatic pressure, and the thickness of 1.5 mm or less makes it possible to provide a desirable effect for improving fuel costs by achieving a light weight of the tire. The thickness of the inner liner layer is preferably set to 0.15 mm or more, and more preferably 0.2 mm or more, and is preferably set to 1.0 mm or less, and more preferably 0.6 mm or less.

The present invention can be applied to various kinds of pneumatic tires for passenger cars, trucks, buses, heavy machines and the like. Fig. 1 is a cross-sectional view showing the right half of a pneumatic tire relating to the present invention. Pneumatic tire 1 is provided with a tread portion 2, a side wall portion 3 and a bead portion 4. Moreover, a bead core 5 is buried in bead portion 4. Further, a carcass 6, being formed from one side of bead portion 4 to the other side of bead portion 4, with each of the ends being turned up around bead core 5 so as to be supported, and a belt layer 7, made of two plies placed on the outside of a crown portion of carcass 6, are placed. An inner liner 9 that is placed from one side of bead portion 4 to the other side of bead portion 4 is arranged on the inside of carcass 6. Moreover, as shown in Fig. 3, an inner liner rubber 9b may be joined to an insulation rubber 11. Belt layer 7 is placed so that two sheets of plies, made of steel cords or cords made from aramide fibers or the like, are arranged so as to allow the cords to mutually intersect with one another between the plies, normally with angles in a range from 5 to 30° in a tire circumferential direction. Here, the carcass has a structure in which organic fiber cords, made from polyester, nylon, aramide or the like, are arranged virtually at 90° relative to the tire circumferential direction, and in an area surrounded by the carcass and its turned-up portion, a bead apex 8 that extends from the top end of bead core 5 toward the side wall is placed.

Moreover, the polymer composition of the present invention may be diverted to a protective film for the sidewall portion of a tire (Fig. 2) or even to a gas-transporting hose. In the case where the polymer composition of the present invention is used as the protective film for the sidewall portion of the tire, the air-shielding property of the tire can be improved so that it is possible to suppress ozone and oxidation degradation. For this reason, it becomes possible to reduce the antioxidant to be used for the sidewall portion. The thickness of the sidewall portion is preferably set in a range from 0.1 to 2.0 mm, and more preferably from 0.2 mm to 0.6 mm.

<EXAMPLES>

Based upon examples, the following description will discuss the present invention in detail; however, the present invention is not intended to be limited thereby.

Various chemicals used in examples and comparative examples are described below.

SIBS 102T: "SIBSTAR 102 (Shore A hardness 25, styrene content 25%)" manufactured by Kaneka Corporation.

SIBS 103T: "SIBSTAR 103 (Shore A hardness 46, styrene content 30%)" manufactured by Kaneka Corporation.

Polyamide-based polymer 1: "UBESTA XPA 9040 (Shore D hardness 40)" manufactured by Ube Industries, Ltd.)

Polyamide-based polymer 2: "UBESTA XPA 9048 (Shore D hardness 48)" manufactured by Ube Industries, Ltd.)

Ethylene-vinyl alcohol copolymer: "Eval E105" manufactured by Kuraray, Co., Ltd.

Nylon: "Nylon 66" manufactured by Ube Industries, Ltd.

PET: "Polyethylene terephthalate PET" manufactured by Ube Industries, Ltd.

Chlorobutyl: "Exxon Chlorobutyl 1068" manufactured by Exxon Mobil Corporation

NR (Natural Rubber): TSR20

C5 petroleum-based resin: "Malkalez T-100AS" manufactured by Maruzen Petrochemical Co., Ltd.

C9 petroleum-based resin: "Petcoal XL" manufactured by Maruzen Petrochemical Co., Ltd.

Non-reactive phenol resin: "SP 1068" manufactured by NOF Corporation Terpene resin 1: "YS Resin PX1150N" manufactured by Yasuhara Chemical Co., Ltd.

Terpene resin 2: "YS Resin PX300N" manufactured by Yasuhara Chemical Co., Ltd.

Paraffin oil: "Mineral Oil" manufactured by Japan Energy Corporation.

Carbon: "Seast V" manufactured by Tokai Carbon Co., Ltd. (N660, N2SA: 27 $m^2/g$)

Hard clay: "Hard Clay Crown" manufactured by Southeastern Clay Company. (U.S.A.)

Talc: "Mistron HAR" manufactured by Luzenac Company. (France) (average particle size: 57μm, average degree of flatness: 4.7)

Mica: "Mica S-200HG" manufactured by Revco Company (Flogobite, average particle size: 50μm, aspect ratio: 55)

<Examples 1 to 19 and Comparative Examples 2 to 9, 11 to 14>

Each of polymer mixtures and softening agents, prepared in accordance with compounding ratios shown in

Tables 2 and 3, were loaded into a rotary rotor (100 rpm, 1 M in length) of an injection press, and after the mixture had been blended, a metal mold having a size of 13 cm × 13 cm × 2 mm in thickness was attached to the press, and the blended matter was extruded through the metal mold under conditions of a metal mold head pressure of 100 Kgf, a head temperature of 220°C, an injection speed of 80 mm/sec and rotor number of revolutions of 100 rpm so that each of polymer sheets of Examples 1 to 19 as well as Comparative Examples 2 to 9 and 11 to 14 was manufactured.

Here, in Examples 6 to 8 as well as 18 and 19, the polymer mixture and the filler were preliminarily mixed by using a kneader, a roll (temperature-adjusting roll (temperature condition: 160°C), a Van Bally mixer or the like, so that a master batch was prepared; thereafter, this was again weighed and loaded into an injection press so that each polymer sheet was produced. The conditions of the injection press were the same as those described earlier.

Moreover, upon manufacturing a pneumatic tire, polymer sheets having thicknesses of 0.6 mm and 0.3 mm were produced by using the polymer mixture, and these were respectively applied to inner liner portions of a tire, and press-molded at 170°C for 20 minutes so that a tire having a size of 195/65R15 was produced.

<Comparative Examples 1 and 10>

In Comparative Examples 1 and 10, to 100 parts by mass of each of rubber components shown in Table 3 were added the following rubber compounds: 4 parts by mass of zinc white ("Ginrei R" manufactured by Toho Zinc Co., Ltd.), 10 parts by mass of mineral oil ("Diana Process PA32" manufactured by Idemitsu Kosan Co., Ltd), 1 part by mass of stearic acid ("Tsubaki" manufactured by NOF Corporation), 0.5 parts by mass of sulfur ("5% oil-treated sulfur powder" manufactured by Turumi Chemicals Industry Co., Ltd.) and 1.2 parts by mass of an accelerator ("Nocceller DM" (di-2-benzothiazolyl disulfide) manufactured by Ouchi Shinko Chemical Industrial Co., Ltd.). First, in accordance with the above-mentioned compounding ratios, the chemicals other than the zinc white, sulfur and vulcanizing accelerator were added thereto by using a Van Bally mixer, and this was kneaded for 4 minutes under a condition of the maximum temperature of 150°C so that a kneaded matter was obtained. Thereafter, to the resulting kneaded matter were added the zinc white, sulfur and vulcanizing accelerator, and this was kneaded for 4 minutes under a condition of the maximum temperature of 95°C by using a twin-screw open roll so that an unvulcanized rubber composition was obtained. The resulting unvulcanized rubber composition was rolled into a sheet by using a metal mold and press-vulcanized for 12 minutes under a condition of 170°C so that each of vulcanized rubber sheets of Comparative Examples 1 and 10 were produced.

Moreover, by using the unvulcanized rubber composition, rubber sheets having thicknesses of 0.6 mm and 0.3 mm were formed, and these were respectively applied to inner liner portions of a tire, and press-molded at 170°C for 20 minutes so that a pneumatic tire having a size of 195/65R15 was produced.

<Adhesion Test>

A topping rubber sheet having a thickness of 2 mm with adjacent carcass cords, the polymer sheet or vulcanized rubber sheet having a thickness of 1 mm and a reinforcing canvas cloth were pressed and heated for 20 minutes under a condition of 150°C so that a carcass was formed.

The resulting carcass was subjected to a peeling test in compliance with JIS K6256 "How to find adhesive property: Vulcanized rubber and thermoplastic rubber", and evaluated by using the following criteria.

Table 1

| | | |
|---|---|---|
| Adhesion drag (room temperature: 23°C, width: 25 cm) | <5N | D |
| | 5-15N | C |
| | 15-30N | B |
| | 30N or more | A |
| | Not bonded | E |

<Air Permeability Test>

An amount of air permeation of each of the polymer sheet and vulcanized rubber sheet was measured in compliance with an ASTM D-1434-75M method.

<Tension Test>

A test piece for No. 3 dumbbell, made from the polymer sheet and vulcanized rubber sheet, was subjected to a tension test in compliance with JIS K6251 "How to find tensile property: Vulcanized rubber and thermoplastic rubber", and breaking elongation (EB) (%) of each of the test pieces was measured.

<Hardness>

The hardness of each of the polymer sheet and vulcanized rubber sheet was measured by using a JIS-A hardness tester at 25°C in compliance with JIS K 6253 "How to find hardness: Vulcanized rubber and thermoplastic rubber".

<Tangent Loss (tanδ)>

The tangent loss was measured by using a viscoelasticity measuring device at a temperature of 25°C in compliance with JIS K 5394 under conditions of an initial strain of 3%, a dynamic strain of ± 2% and a frequency of 10 Hz.

<Processability>

A string-shaped rubber after the injection mixing and extruding processes was rolled by a temperature-adjusting roll (150°C) to form a sheet having a thickness of 0.6 mm. At this time, the sheet flatness, the presence or absence of holes and the degree of irregularities on the sheet ends were evaluated based upon ranks. The evaluation criteria are shown below:

A: flat sheet, no holes, straight sheet ends, and an appropriate processing tack placed relative to adjacent rubber
B: Although all the above-mentioned A were not satisfied, practically applicable processability was obtained.
C: Practically applicable processability was not obtained.

<Rate of change in rolling resistance>

By using a rolling resistance tester manufactured by Kobe Steel, Ltd., each of produced steel radial PC tires of 195/65R15 was assembled onto a JIS standard rim of 15×6JJ, and subjected to a traveling test at room temperature (38°C) under conditions of a load of 3.4 kN, a pneumatic pressure of 230 kPa and a velocity of 80 km/hour so that the rolling resistance was measured. Then, by setting Comparative Example 1 as a reference (± 0), the rate of change in rolling resistance (%) of each of the compounding was indicated by an index based upon the following formula. Here, the smaller the rate of change in rolling resistance becomes, the further the rolling resistance is reduced, indicating a better state, and more specifically, the rolling resistance is preferably represented by a minus value.

**(Rate of change in rolling resistance) = (Rolling resistance of each of compounding – Rolling resistance of Comparative Example 1) ÷ (Rolling resistance of Comparative Example 1) × 100**

<Test of reduction rate of static pneumatic pressure>

Each of steel radial PC tires of 195/65R15 was assembled onto a JIS standard rim of 15×6JJ, and filled with air having an initial pneumatic pressure of 300 Kpa; after the tire was left at normal temperature for 90 days, the reduction rate of pneumatic pressure was calculated.

<Tire Durability Test>

Each of steel radial PC tires of 195/65R15 was assembled onto a JIS standard rim of 15×6JJ, and this was subjected to a traveling test on a drum with φ1707 mm at a velocity of 80 km/h at normal temperature (38°C) under test conditions of a pneumatic pressure of 150 kPa with a load of 6.96 KN. If an air leakage caused by a crack on the inside of the inner liner occurred, or if a swell occurred in the outside appearance of the side wall, the traveling test was stopped. The durability was determined based upon the traveled distance up to the occurrence of the swell. The evaluation criteria are shown below:

A: Distance > 30,000 km
B: 20,000 < Distance ≤ 30,000 km
C: 10,000 ≤ Distances 20,000 km

The results are shown in Tables 2 and 3.

Table 2

| | | Example | | | | | | | | | | | | | | | | | | |
|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 | 19 |
| Polymer | SIBS 102T | 90 | 80 | 60 | | 90 | 90 | 90 | 90 | 70 | 90 | 90 | 97 | 90 | 90 | 90 | 90 | 90 | 90 | 90 |
| | SIBS 103T | | | | 90 | | | | | | | | | | | | | | | |
| | Polyamide-based polymer 1 | 10 | 20 | 40 | 10 | | 10 | | 10 | 10 | 10 | 10 | 3 | 10 | 10 | 10 | 10 | 10 | 10 | 10 |
| | Polyamide-based polymer 2 | | | | | 10 | | | | | | | | | | | | | | |
| | Ethylene-vinyl alcohol copolymer | | | | | | | | | 20 | | | | | | | | | | |
| | Nylon | | | | | | | | | | | | | | | | | | | |
| | PET | | | | | | | | | | | | | | | | | | | |
| | Chlorobutyl | | | | | | | | | | | | | | | | | | | |
| | NR | | | | | | | | | | | | | | | | | | | |
| Softening agent | C5 petroleum-based resin | | | | | | | | | | 2 | | | 10 | 15 | 20 | 30 | | 15 | 15 |
| | Non-reactive phenol resin | | | | | | | | | | | | | | | | | | | |
| | Terpene resin 1 | | | | | | | | | | | 2 | | | | | | 10 | | |
| | Paraffin oil | | | | | | | | | | | | | | | | | | | |
| Filler | Carbon | | | | | | 25 | | | | | | | | | | | | | |
| | Hard clay | | | | | | | 25 | | | | | | | | | | | | |

(continued)

| | | Example | | | | | | | | | | | | | | | | | | |
|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 | 19 |
| | Talc | | | | | | | | 25 | | | | | | | | | | | |
| | Mica | | | | | | | | | | | | | | | | | | 10 | 25 |
| Laboratory test | Adhesion test | A | A | A | A | A | A | A | A | B | A | A | B | A | A | A | A | A | A | A |
| | Amount of air permeation | 4 | 5.8 | 11 | 5.1 | 4.2 | 4 | 4.1 | 4 | 0.3 | 4.1 | 4.3 | 3.8 | 4.5 | 4.7 | 4.8 | 5.1 | 4 | 3.5 | 2.5 |
| | Breaking elongation EB (%) | 650 | 585 | 430 | 460 | 650 | 480 | 580 | 600 | 250 | 700 | 720 | 360 | 620 | 670 | 660 | 730 | 680 | 610 | 480 |
| | Hardness (Shore-A) | 45 | 53 | 65 | 59 | 47 | 49 | 51 | 50 | 83 | 43 | 42 | 44 | 43 | 42 | 41 | 38 | 41 | 46 | 58 |
| | Tangent loss (tanδ) | - | - | - | - | - | - | - | - | - | 0.25 | - | - | 0.27 | 0.30 | 0.33 | 0.48 | 0.28 | 0.33 | 0.34 |
| Processability | Flatness, irregularities on ends, stickiness | - | - | - | - | - | - | - | - | - | C Insufficient stickiness | - | - | B | A | A | C Excessive | B | A | A |
| Tire test | (Sheet thickness: 0.6 mm) | | | | | | | | | | | | | | | | | | | |
| | Rate of change in rolling resistance | -2.0 | -0.2 | 1.2 | -2.8 | -2.2 | -0.6 | -0.3 | -0.6 | 2.0 | -2.3 | -2.6 | -1.8 | -2.2 | -2.1 | -1.8 | -1.6 | -2.3 | -1.7 | -1.5 |
| | Reduction rate of static pneumatic pressure (%/month) | 1.0 | 1.4 | 2.5 | 1.2 | 0.9 | 1.0 | 1.2 | 0.8 | 0.31 | 1.1 | 1.2 | 0.9 | 1.1 | 1.1 | 1.1 | 1.1 | 1·1 | 0.7 | 0.5 |

(continued)

| | | Example | | | | | | | | | | | | | | | | | | |
|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 | 19 |
| | (Sheet thickness: 0.3 mm) | | | | | | | | | | | | | | | | | | | |
| | Rate of change in rolling resistance | -3.5 | -0.35 | 0.5 | -4 | -3.7 | -1 | -0.7 | -1.1 | 1.1 | -3.8 | -3.9 | -3.2 | -3.8 | -3.8 | -3.8 | -3.8 | -3.8 | -3.8 | -3.0 |
| | Reduction rate of static pneumatic pressure (%/ month) | 1.9 | 2.8 | na | 2.3 | 1.9 | 2.0 | 2.4 | 1.5 | 0.44 | 2 | 2.3 | 1.7 | 2 | 2 | 2 | 2 | 2 | 1.4 | 1.0 |
| | Tire durability | A | A | B | B | A | A | A | A | C | A | A | B | A | A | A | A | A | A | B |

Table 3

| | | Comparative Example | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| Polymer | SIBS 102T | | 50 | 100 | | | | | | | | 99.2 | 90 | 90 | 90 |
| | SIBS 103T | | | | | | | | | | | | | | |
| | Polyamide-based polymer 1 | | 50 | | 100 | | | | | 80 | | 0.8 | 10 | 10 | 10 |
| | Polyamide-based polymer 2 | | | | | | | | | | | | | | |
| | Ethylene-vinyl alcohol copolymer | | | | | 100 | | | 50 | 20 | | | | | |
| | Nylon | | | | | | 100 | | | | | | | | |
| | PET | | | | | | | 100 | | | | | | | |
| | Chlorobutyl | 80 | | | | | | | 50 | | 80 | | | | |
| | NR | 20 | | | | | | | | | 20 | | | | |
| Softening agent | C5 petroleum-based resin | | | | | | | | | | | | | | |
| | Non-reactive phenol resin | | | | | | | | | | | | 2 | 10 | |
| | Terpene resin 1 | | | | | | | | | | | | | | |
| | Paraffin oil | | | | | | | | | | | | | | 10 |
| Filler | Carbon | 60 | | | | | | | | | 35 | | | | |
| | Hard clay | | | | | | | | | | | | | | |
| | Talc | | | | | | | | | | | | | | |
| | Mica | | | | | | | | | | | | | | |
| Laboratory test | Adhesion test | A | A | D | A | E | E | E | E | B | A | D | D | D | B |
| | Amount of air permeation | 1.2 | 14 | 3.5 | 8.5 | 0.1 or less | 0.1 or less | 0.1 or less | 0.1 or less | 2.2 | 1.4 | 3.5 | 4.1 | 4.1 | 8.8 |
| | Breaking elongation EB (%) | 605 | 350 | 355 | Unmeasurable | Unmeasurable | Unmeasurable | Unmeasurable | Unmeasurable | Unmeasurable | 740 | 360 | 500 | 520 | 280 |
| | Hardness (Shore-A) | 55 | 73 | 42 | 90 or more | 90 or more | 90 or more | 90 or more | 90 or more | 90 or more | 48 | 43 | 50 | 48 | 37 |
| | Tangent loss (tanδ) | - | - | - | - | - | - | - | - | - | - | - | 0.28 | 0.29 | 0.29 |
| Processability | Flatness, irregularities on ends, stickiness | - | - | - | - | - | - | - | - | - | - | - | B | A | C: insufficient stickiness, much smoke generation, irregularities on edges |
| Tire test | (Sheet thickness: 0.6 mm) | | | | | | | | | | | | | | |
| | Rate of change in rolling resistance | Reference | 1.8 | Unable to produce | Insignificance | Insignificance | Insignificance | Insignificance | Insignificance | Insignificance | -0.5 | Unable to produce | Insignificance | Insignificance | -2.7 |
| | Reduction rate of static pneumatic pressure (%/month) | 2.5 | 5.6 | - | - | - | - | - | - | - | 2.8 | - | - | - | 2.0 |
| | (Sheet thickness: 0.3 mm) | | | | | | | | | | | | | | |
| | Rate of change in rolling resistance | -1.2 | na | Unable to produce | Insignificance | Insignificance | Insignificance | Insignificance | Insignificance | Insignificance | -1.8 | Unable to produce | Insignificance | Insignificance | -4.8 |
| | Reduction rate of static pneumatic pressure (%/month) | 4.8 | na | - | - | - | - | - | - | - | 5.2 | - | - | - | 3.8 |
| | Tire durability | A | C | - | - | - | - | - | - | - | A | - | - | - | C |

<Examples 20 and 21, Comparative Examples 15 to 19>

Each of polymer mixtures, prepared in accordance with compounding ratios shown in Table 4 (with a filler being contained in that of Comparative Example 15), was formed into pellets by using a twin-screw extruder (extrusion diameter: 50mmϕ, length: 1 m, adjusted temperature: 220°C), and the resulting pellets were then formed into each of polymer films of Examples 20 and 21, as well as Comparative Examples 15 to 19, by using a T-die film extruder (extrusion diameter: 80mmϕ, adjusted temperature: 220°C, film gauge: 0.6 mm). Each of inner liner rubber/insulation rubber joined bodies that were obtained by joining each of the polymer films to insulation rubber rolled under a temperature of a calender process shown in Table 4 was subjected to the following tests.

Moreover, upon producing a pneumatic tire, polymer sheets having thicknesses of 0.6 mm and 0.3 mm were prepared by using the polymer film and insulation rubber, and these were respectively applied to inner liner portions of the tire, and press-molded at 170°C for 20 minutes so that a tire having a size of 195/65R15 was produced.

<Adhesion Test>

A topping rubber sheet having a thickness of 2 mm with adjacent carcass cords, the inner liner rubber/insulation rubber joined body having a thickness of 1 mm and a reinforcing canvas cloth were pressed and heated for 20 minutes under a condition of 150°C so that a carcass was formed, and this was evaluated under the same conditions and the same criteria as those of Example 1.

<Amount of Air Permeation>

Each of the inner liner rubber/insulation rubber joined bodies was measured under the same conditions as those of Example 1.

<Tangent Loss Index>

The tangent loss (tanδ) of each of the inner liner rubber/insulation rubber joined bodies was measured under the same conditions as those of Example 10. Based upon Comparative Example 15 serving as a reference (100), the

tangent loss of each of the compounding was indicated by an index.

$$(\text{Tangent loss index}) = (\text{Tangent loss of each compounding}/\text{Tangent loss of Comparative Example 15}) \times 100$$

<Processability>

A sheet of each of the inner liner rubber/insulation rubber joined bodies having a thickness of 0.6 mm was produced by using a film extruder. At this time, the sheet flatness, the presence or absence of holes and the degree of irregularities on the sheet ends were evaluated based upon ranks. The evaluation criteria are shown below:

A: flat sheet, no holes, straight sheet ends, and an appropriate processing tack placed relative to adjacent rubber
B: Although all the above-mentioned A were not satisfied, practically applicable processability was obtained.
C: Practically applicable processability was not obtained.

<Rate of change in rolling resistance>

The rolling resistance was measured by using the same method as that of Example 1. Then, by setting Comparative Example 15 as a reference (± 0), the rate of change in rolling resistance (%) of each of the compounding was indicated by an index based upon the following formula. Here, the smaller the rate of change in resistance becomes, the further the rolling resistance is reduced, indicating a better state, and more specifically, the rolling resistance is preferably represented by a minus value.

$$(\text{Rate of change in rolling resistance}) = (\text{Rolling resistance of each of compounding} - \text{Rolling resistance of Comparative Example 15}) / (\text{Rolling resistance of Comparative Example 15}) \times 100$$

<Test of reduction rate of static pneumatic pressure>

The rate of reduction of pneumatic pressure was calculated by using the same method as that of Example 1.
The results of the tests are shown in Table 4.

Table 4

| | | Example | | Comparative Example | | | | |
|---|---|---|---|---|---|---|---|---|
| | | 20 | 21 | 15 | 16 | 17 | 18 | 19 |
| Polymer | SIBS102T | 90 | 70 | | 50 | 100 | | |
| | Polyamide-based polymer 1 | 10 | 10 | | 50 | | 100 | |
| | Ethylene-vinyl alcohol copolymer | | 20 | | | | | 100 |
| | Chlorobutyl | | | 80 | | | | |
| | NR | | | 20 | | | | |
| Filler | Carbon | | | 60 | | | | |
| Temperature (°C) of calender process | | 100 | 100 | | 100 | 100 | 100 | 100 |

(continued)

| | | Example | | Comparative Example | | | | |
|---|---|---|---|---|---|---|---|---|
| | | 20 | 21 | 15 | 16 | 17 | 18 | 19 |
| Laboratory test | Adhesion test | A | A | B | A | D | A | D |
| | Amount of air permeation | 4.3 | 7.2 | 12.2 | 8.2 | 3.5 | 25 | 10.2 |
| | Tangent loss index | 82 | 87 | 100 (reference) | 83 | 85 | 90 | 90 |
| Processability | Stickiness | A | A | B | B | B | B | B |
| Tire test | Rate of change in rolling resistance | -4.9 | -3.9 | 0 (reference) | -5.2 | -5 | -3.5 | -3.6 |
| | Reduction rate of static pneumatic pressure (%/ month) | 2.2 | 3 | 4 | 3.2 | 1.8 | 10.2 | 7.2 |

<Examples 22 to 25, Comparative Examples 20 to 24>

Each of polymer mixtures, softening agents and a filler, prepared in accordance with compounding ratios shown in Table 5, were formed into pellets by using a twin-screw extruder (extrusion diameter: 50mmφ, length: 1 m, adjusted temperature: 220PC), and the resulting pellets were then formed into each of polymer sheets of Examples 22 to 25, as well as Comparative Examples 20 to 24, by using a T-die film extruder (extrusion diameter: 80mmφ, adjusted temperature: 220°C, film gauge: 0.6 mm). Each of the polymer sheets was subjected to the following tests.

Moreover, upon producing a pneumatic tire, polymer sheets having thicknesses of 0.6 mm and 0.3 mm were prepared in accordance with compounding ratios shown in Table 5, and these were respectively applied to inner liner portions of the tire, and press-molded at 170°C for 20 minutes so that a tire having a size of 195/65R15 was produced.

<Adhesion Test>

A topping rubber sheet having a thickness of 2 mm with adjacent carcass cords, the polymer sheet having a thickness of 1 mm and a reinforcing canvas cloth were pressed and heated for 20 minutes under a condition of 150°C so that a carcass was formed, and this was evaluated under the same conditions and the same criteria as those of Example 1.

<Amount of Air Permeation>

Each of the polymer sheets was measured under the same conditions as those of Example 1.

<Tangent Loss Index>

The tangent loss (tanδ) of each of the polymer sheets was measured under the same conditions as those of Example 10. Based upon Comparative Example 20 serving as a reference (100), the tangent loss of each of the compounds was indicated by an index.

$$(\text{Tangent loss index}) = (\text{Tangent loss of each compounding}/\text{Tangent loss of Comparative Example 20}) \times 100$$

<Processability>

A polymer sheet having a thickness of 0.6 mm was produced by using a film extruder. At this time, the sheet

flatness, the presence or absence of holes and the degree of irregularities on the sheet ends were evaluated based upon ranks. The evaluation criteria are shown below:

A: flat sheet, no holes, straight sheet ends, and an appropriate processing tack placed relative to adjacent rubber
B: Although all the above-mentioned A were not satisfied, practically applicable processability was obtained.
C: Practically applicable processability was not obtained.

<Rate of change in rolling resistance>

The rolling resistance was measured by using the same method as that of Example 1. Then, by setting Comparative Example 20 as a reference (± 0), the rate of change in rolling resistance (%) of each of the compounding was indicated by an index based upon the following formula. Here, the smaller the rate of change in rolling resistance becomes, the further the rolling resistance is reduced, indicating a better state, and more specifically, the rolling resistance is preferably represented by a minus value.

$$\text{(Rate of change in rolling resistance)} = \text{(Rolling resistance of each of compounding} - \text{Rolling resistance of Comparative Example 20)} \div \text{(Rolling resistance of Comparative Example 20)} \times 100$$

<Test of reduction rate of static pneumatic pressure>

The rate of reduction of pneumatic pressure was calculated by using the same method as that of Example 1.
The results of the tests are shown in Table 5.

Table 5

| | | Example | | | | Comparative Example | | | | |
|---|---|---|---|---|---|---|---|---|---|---|
| | | 22 | 23 | 24 | 25 | 20 | 21 | 22 | 23 | 24 |
| Polymer | SIBS102T | 90 | 90 | 90 | 70 | | 50 | 100 | | |
| | Polyamide-based polymer 1 | 10 | 10 | 10 | 10 | | 50 | | 100 | |
| | Ethylene-vinyl alcohol copolymer | | | | 20 | | | | | 100 |
| | Chlorobutyl | | | | | 80 | | | | |
| | NR | | | | | 20 | | | | |
| Softening agent | C5 petroleum-based resin | 10 | | | 10 | | 10 | 10 | 10 | 10 |
| | C9 petroleum-based resin | | 10 | | | | | | | |
| | Terpene resin 2 | | | 10 | | | | | | |
| Filler | Carbon | | | | | 60 | | | | |

(continued)

| | | Example | | | | Comparative Example | | | | |
|---|---|---|---|---|---|---|---|---|---|---|
| | | 22 | 23 | 24 | 25 | 20 | 21 | 22 | 23 | 24 |
| Laboratory test | Adhesion test | A | A | A | A | B | A | D | A | D |
| | Amount of air permeation | 4 | 4.3 | 4.1 | 7.2 | 12.2 | 8.2 | 3.5 | 25 | 10.2 |
| | Tangent loss index | 85 | 82 | 84 | 87 | 100 (reference) | 83 | 85 | 90 | 90 |
| Processability | Stickiness | A | A | A | A | B | B | B | B | B |
| Tire test | Rate of change in rolling resistance | -5.2 | -4.9 | -5.1 | -3.9 | 0 (reference) | -5.2 | -5 | -3.5 | -3.6 |
| | Reduction rate of static pneumatic pressure (%/month) | 2 | 2.2 | 2.5 | 3 | 4 | 3.2 | 1.8 | 10.2 | 7.2 |

Examples 22 to 24 relate to polymer compositions in which, to 100 parts by mass of rubber components including 90% by mass of a styrene-isobutylene-styrene triblock copolymer and 10% by mass of a polyamide-based polymer, 10 parts by mass of a C5 petroleum-based resin, a C9 petroleum-based resin or a terpene resin is added. Example 25 relates to a polymer composition in which, to 100 parts by mass of rubber components including 70% by mass of a styrene-isobutylene-styrene triblock copolymer, 10% by mass of a polyamide-based polymer and 20% by mass of an ethylene-vinyl alcohol copolymer, 10 parts by mass of a C5 petroleum-based resin is added. These have better adhesive property and anti-air permeability and exert superior processability in comparison with those of Comparative Example 20 containing chlorobutyl and NR as rubber components.

In the polymer composition of Comparative Example 21, the content of the styrene-isobutylene-styrene triblock copolymer is small, resulting in degradation of the anti-air permeability and static air reduction rate. In Comparative Example 22, no polyamide-based polymer is contained, resulting in degradation of the adhesive property. In Comparative Example 23, no styrene-isobutylene-styrene triblock copolymer is contained, resulting in degradation of the anti-air permeability and static air reduction rate. In Comparative Example 24, neither styrene-isobutylene-styrene triblock copolymer nor polyamide-based polymer is contained, resulting in degradation of the anti-air permeability, static air reduction rate and adhesive property.

<Examples 26 and 27, Comparative Examples 25 to 29>

Each of polymer mixtures and a fiiler, prepared in accordance with compounding ratios shown in Table 6, were formed into pellets by using a twin-screw extruder (extrusion diameter: 50mmφ, length: 1 m, adjusted temperature: 220°C), and the resulting pellets were then formed into each of polymer films of Examples 26 and 27, as well as Comparative Examples 25 to 29, by using a T-die film extruder (extrusion diameter: 80mmφ, adjusted temperature: 220°C, film gauge: 0.6 mm). Each of the polymer films was coated with a rubber paste having each of rubber composition concentrations shown in Table 6 to prepare an inner liner rubber, and this was subjected to the following tests. Here, the rubber paste has a concentration of 20% in the compounding ratio.

Moreover, upon producing a pneumatic tire, polymer sheets having thicknesses of 0.6 mm and 0.3 mm were prepared by using the polymer films having compounding ratios shown in Table 6, and inner liner rubbers, each formed by coating the polymer sheet with a rubber paste, were respectively applied to inner liner portions of the tire, and press-molded at 170°C for 20 minutes so that a tire having a size of 195/65R15 was produced.

<Adhesion Test>

A topping rubber sheet having a thickness of 2 mm with adjacent carcass cords, each of the inner liner rubbers, coated with the rubber paste, having a thickness of 1 mm and a reinforcing canvas cloth were pressed and heated for

20 minutes under a condition of 150°C so that a carcass was formed, and this was evaluated under the same conditions and the same criteria as those of Example 1.

<Amount of Air Permeation>

Each of the inner liner rubbers coated with the rubber paste was measured under the same conditions as those of Example 1.

<Tangent Loss Index>

The tangent loss (tanδ) of each of the inner liner rubbers coated with the rubber paste was measured under the same conditions as those of Example 10. Based upon Comparative Example 25 serving as a reference (100), the tangent loss of each of the compounding was indicated by an index.

(Tangent loss index) = (Tangent loss of each compounding/Tangent loss of Comparative Example 25) × 100

<Processability>

A sheet of the inner liner rubber/insulation rubber joined body having a thickness of 0.6 mm was produced by using a film extruder. At this time, the sheet flatness, the presence or absence of holes and the degree of irregularities on the sheet ends were evaluated based upon ranks. The evaluation criteria are shown below:

A: flat sheet, no holes, straight sheet ends, and an appropriate processing tack placed relative to adjacent rubber
B: Although all the above-mentioned A were not satisfied, practically applicable processability was obtained.
C: Practically applicable processability was not obtained.

<Rate of change in rolling resistance>

The rolling resistance was measured by using the same method as that of Example 1. Then, by setting Comparative Example 25 as a reference (± 0), the rate of change in rolling resistance (%) of each of the compounding was indicated by an index based upon the following formula. Here, the smaller the rate of change in rolling resistance becomes, the further the rolling resistance is reduced, indicating a better state, and more specifically, the rolling resistance is preferably represented by a minus value.

(Rate of change in rolling resistance) = (Rolling resistance of each of compounds − Rolling resistance of Comparative Example 25) ÷ (Rolling resistance of Comparative Example 25) × 100

<Test of reduction rate of static pneumatic pressure>

The rate of reduction of pneumatic pressure was calculated by using the same method as that of Example 1.
The results of the tests are shown in Table 6.

Table 6

| | | Example | | Comparative Example | | | | |
|---|---|---|---|---|---|---|---|---|
| | | 26 | 27 | 25 | 26 | 27 | 28 | 29 |
| Polymer | SIBS102T | 90 | 70 | | 50 | 100 | | |
| | Polyamide-based polymer 1 | 10 | 10 | | 50 | | 100 | |
| | Ethylene-vinyl alcohol copolymer | | 20 | | | | | 100 |
| | Chlorobutyl | | | 80 | | | | |
| | NR | | | 20 | | | | |
| Filler | Carbon | | | 60 | | | | |
| Rubber paste concentration (% by weight) | | 10 | 10 | | 10 | 10 | 10 | 10 |
| Laboratory test | Adhesion test | A | A | B | A | D | A | D |
| | Amount of air permeation | 4.3 | 7.2 | 12.2 | 8.2 | 3.5 | 25 | 10.2 |
| | Tangent loss index | 82 | 87 | 100 (reference) | 83 | 85 | 90 | 90 |
| Processability | Stickiness | A | A | B | B | B | B | B |
| Tire test | Rate of change in rolling resistance | -4.9 | -3.9 | 0 (reference) | -5.2 | -5 | -3.5 | -3.6 |
| | Reduction rate of static pneumatic pressure (%/ month) | 2.2 | 3 | 4 | 3.2 | 1.8 | 10.2 | 7.2 |

Although the present invention has been described and illustrated in detail, it is clearly understood that the same is by way of illustration and example only and is not to be taken by way of limitation, the scope of the present invention being interpreted by the terms of the appended claims.

INDUSTRIAL APPLICABILITY

The pneumatic tire of the present invention, which is superior in suppressing effect of pneumatic pressure reduction, durability and adhesive property with adjacent rubber, can be applied to various kinds of pneumatic tires for use in passenger cars, trucks, buses, heavy machines and the like.

## Claims

1. A pneumatic tire (1) comprising an inner liner (9) made from a polymer mixture comprising: a styrene-isobutylene-styrene triblock copolymer in a range from 99 to 60% by mass; and a polyamide-based polymer in a range from 1 to 40% by mass containing polyamide in the molecular chain thereof and having a Shore D hardness of 70 or less.

2. The pneumatic tire (1) according to claim 1, wherein said polymer mixture comprises an ethylene-vinyl alcohol copolymer in a range from 15 to 40% by mass.

3. The pneumatic tire (1) according to claim 1 or 2, wherein said styrene-isobutylene-styrene triblock copolymer comprises styrene in a range from 10 to 30 % by mass.

4. The pneumatic tire (1) according to any one of claims 1 to 3, wherein said polyamide-based polymer is a block copolymer composed of a polyamide component and a polyether component.

5. A pneumatic tire (1) comprising an inner liner (9) made from a polymer composition, wherein said polymer composition comprises a polymer mixture as specified in claim 1 and a filler in a range from 5 to 40 parts by mass relative to 100 parts by mass of the polymer mixture.

6. The pneumatic tire (1) according to claim 5, wherein said polymer composition comprises mica serving as said filler in a range from 10 to 25 parts by mass relative to 100 parts by mass of the polymer mixture

7. The pneumatic tire (1) according to claim 5, wherein said polymer composition comprises 1 to 30 parts by mass of a non-phenol-based resin relative to 100 parts by mass of the polymer mixture, wherein said non- phenol-based resin includes one kind or more resins selected from the group consisting of a C5 petroleum-based resin, a C9 petroleum-based resin and a terpene resin.

8. A pneumatic tire (1) comprising an inner liner rubber/insulation rubber joined body, obtained by joining an insulation rubber (11) rolled at a temperature from 70°C to 130°C in a calender process to an inner liner rubber (9b) made from a polymer mixture as specified in claim 1.

9. A pneumatic tire (1) comprising an inner liner rubber/insulation rubber joined body, obtained by joining an insulation rubber (11) rolled at a temperature from 70°C to 130°C in a calender process to an inner liner rubber (9b) made from a polymer composition as specified in claim 5.

10. The pneumatic tire (1) according to claim 1 or 5, wherein said inner liner is coated with a rubber paste having a concentration of a rubber composition in a range from 5 to 20% by weight.

11. The pneumatic tire (1) according to claim 1 comprising: a side wall portion (3) provided with a protective film (10) made from the polymer composition as specified in claim 5.

**Patentansprüche**

1. Luftreifen (1) umfassend einen Innerliner (9), welcher aus einer Polymermischung hergestellt ist, welche enthält: ein Styrol-Isobutylen-Styrol-Triblock-Copolymer in einer Menge zwischen 99 und 60 Massen-% sowie ein auf Polyamid basierendes Polymer, welches in der Molekülkette Polyamid enthält und eine Shore D-Härte von 70 oder weniger aufweist, in einer Menge von 1 bis 40 Massen-%.

2. Luftreifen (1) nach Anspruch 1, wobei die Polymermischung ein Etylen-Vinylalkohol-Copolymer in einer Menge von 15 bis 40 Massen-% enthält.

3. Luftreifen (1) nach Anspruch 1 oder 2, wobei das Styrol-Isobutylen-Styrol-Triblock-Copolymer Styrol in einer Menge von 10 bis 30 Massen-% enthält.

4. Luftreifen (1) nach einem der Ansprüche 1 bis 3, wobei das auf Polyamid basierende Polymer ein Blockcopolymer ist, welches aus einem Polyamidbestandteil und einem Polyetherbestandteil zusammengesetzt ist.

5. Luftreifen (1) umfassend einen Innerlinder (9), welcher aus einer Polymerzusammensetzung hergestellt ist, wobei die Polymerzusammensetzung eine Polymermischung nach Anspruch 1 sowie einen Füllstoff in einer Menge zwischen 5 und 40 Massenteilen bezogen auf 100 Massenteile der Polymermischung enthält.

6. Luftreifen (1) nach Anspruch 5, wobei die Polymerzusammensetzung als Füllstoff fungierenden Glimmer in einer Menge von 10 bis 25 Massenteilen bezogen auf 100 Massenteile der Polymermischung enthält.

7. Luftreifen (1) nach Anspruch 5, wobei die Polymerzusammensetzung 1 bis 30 Massenteile eines Harzes auf Nicht-Phenolbasis bezogen auf 100 Massenteile der Polymermischung enthält, wobei das Harz auf Nicht-Phenolbasis ein oder mehrere Harze ausgewählt aus der Gruppe bestehend aus einem $C_5$-Erdöl basierenden Harz, einem

$C_9$-Erdöl basierenden Harz und einem Terpenharz enthält.

8. Luftreifen (1) umfassend eine verbundenen Innerlinerkautschuk-/Isolierkautschuk-Körper, welcher durch das Verbinden eines Isolierkautschuks (11), der bei einer Temperatur zwischen 70°C und 130°C in einem Kalenderverfahren gewalzt worden ist, auf einen Innerlinerkautschuk (9b), der aus einer Polymermischung nach Anspruch 1 hergestellt worden ist, erhalten worden ist.

9. Luftreifen (1) umfassend einen verbundenen Innerlinerkautschuk-/Isolierkautschuk-Körper, welcher durch das Verbinden eines Isolierkautschuks (11), der bei einer Temperatur zwischen 70°C und 130°C in einem Kalenderverfahren gewalzt worden ist, auf einen Innerlinerkautschuk (9b), der aus einer Polymerzusammensetzung nach Anspruch 5 hergestellt worden ist, erhalten worden ist.

10. Luftreifen (1) nach Anspruch 1 oder 5, wobei der Innerliner mit einer Kautschukpaste mit einer Konzentration der Kautschukzusammensetzung in einem Bereich von 5 bis 20 Gewichtsprozent beschichtet ist.

11. Luftreifen (1) nach Anspruch 1, welcher ein Seitenwandteilstück (3) umfasst, welches mit einem Schutzfilm (10) versehen ist, der aus einer Polymerzusammensetzung nach Anspruch 5 hergestellt ist.

## Revendications

1. Pneu (1) comprenant une gomme intérieure (9) à base d'un mélange de polymères comprenant : un copolymère triséquencé de styrène-isobutylène-styrène dans une plage de 99 à 60 % en poids ; et un polymère à base de polyamide dans une plage de 1 à 40 % en poids contenant le polyamide dans sa chaîne moléculaire et ayant une dureté Shore D de 70 ou moins.

2. Pneu (1) selon la revendication 1, dans lequel ledit mélange de polymères comprend un copolymère d'éthylène-alcool vinylique dans une plage de 15 à 40 % en poids.

3. Pneu (1) selon les revendications 1 ou 2, dans lequel ledit copolymère triséquencé de styrène-isobutylène-styrène comprend une quantité de styrène dans une plage de 10 à 30 % en poids.

4. Pneu (1) selon l'une quelconque des revendications 1 à 3, dans lequel ledit polymère à base de polyamide est un copolymère séquencé constitué d'un composant polyamide et d'un composant polyéther.

5. Pneu (1) comprenant une gomme intérieure (9) à base d'une composition polymère, dans lequel ladite composition polymère comprend un mélange de polymères tel que défini dans la revendication 1 et une charge dans une plage de 5 à 40 parties en poids pour 100 parties en poids de mélange de polymères.

6. Pneu (1) selon la revendication 5, dans lequel ladite composition polymère comprend du mica à titre de ladite charge dans une plage de 10 à 25 parties en poids pour 100 parties en poids de mélange de polymères.

7. Pneu (1) selon la revendication 5, dans lequel ladite composition polymère comprend 1 à 30 parties en poids d'une résine non phénolique pour 100 parties en poids de mélange de polymères, ladite résine non phénolique comprenant un ou plusieurs types de résines choisis dans le groupe constitué par une résine C5 à base de pétrole, une résine C9 à base de pétrole et une résine terpénique.

8. Pneu (1) comprenant un corps fusionné à base de gomme intérieure/gomme d'isolation, obtenu par fusion d'une gomme d'isolation (11) laminée à une température de 70 à 130 °C dans un procédé de calandrage à une gomme intérieure (9b) à base du mélange de polymères tel que défini dans la revendication 1.

9. Pneu (1) comprenant un corps fusionné à base de gomme intérieure/gomme d'isolation, obtenu par fusion d'une gomme d'isolation (11) laminée à une température de 70 à 130 °C dans un procédé de calandrage à une gomme intérieure (9b) à base de la composition polymère telle que définie dans la revendication 5.

10. Pneu (1) selon les revendications 1 ou 5, dans lequel ladite gomme intérieure est revêtue d'une pâte à base de caoutchouc ayant une concentration en composition de caoutchouc dans la plage de 5 à 20 % en poids.

11. Pneu (1) selon la revendication 1 comprenant : une partie de flanc (3) dotée d'un film protecteur (10) à base de la composition polymère telle que définie dans la revendication 5.

FIG.1

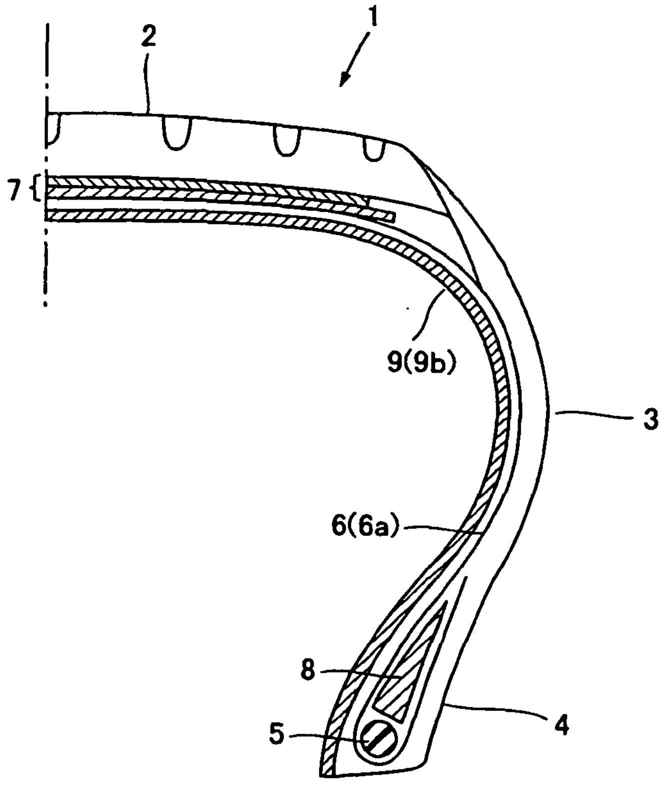

FIG.2

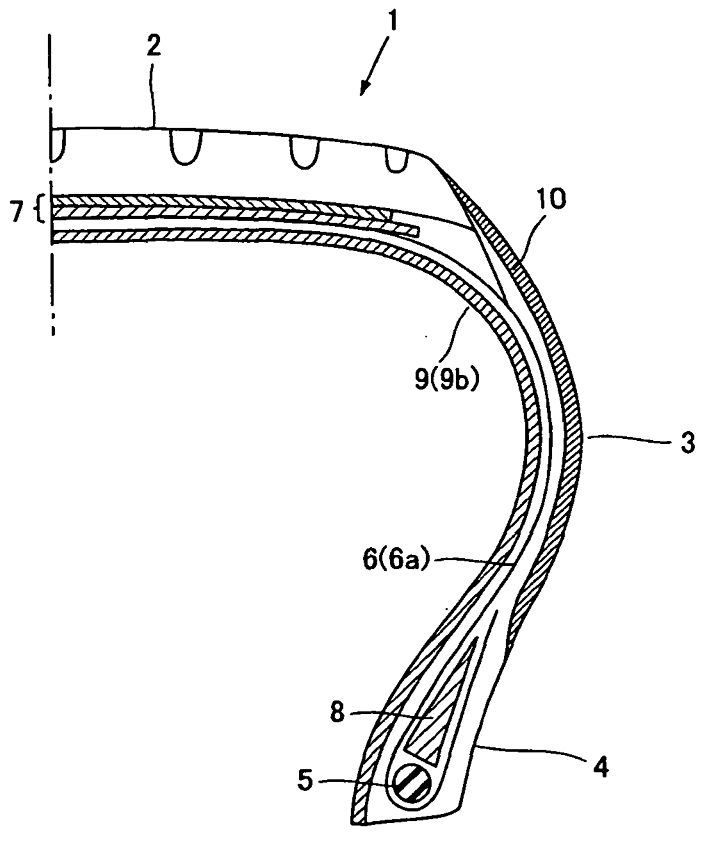

FIG.3

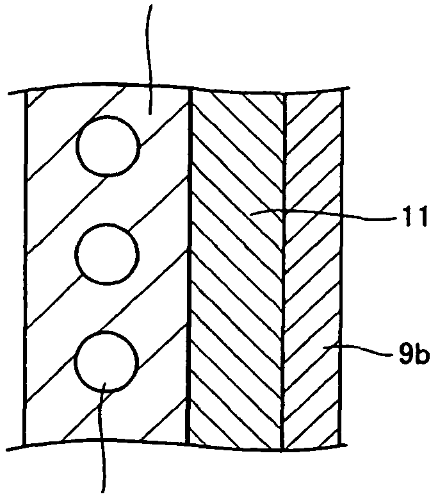

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007291256 A
- JP 9165469 A
- JP 2005344030 A
- WO 03029020 A1
- JP 2007050614 A
- JP 62048704 A
- JP 6462308 B
- US 4946899 A
- US 5219948 A
- JP 3174403 A
- JP 56065026 A
- JP 55133424 A
- JP 63095251 A